# EUROPÄISCHE PATENTSCHRIFT

(11) **EP 0 899 281 B1**
(45) Veröffentlichungstag und Bekanntmachung des Hinweises auf die Patenterteilung: **28.06.2000**
(21) Anmeldenummer: 98115214.3
(22) Anmeldetag: 13.08.1998
(51) Int. Cl.: C08F 265/04, C08F 2/38

(54) **Lagerstabile, silanmodifizierte Kern-Hülle-Copolymerisate**
storage stable silane modified core-shell copolymers
Copolymères coeur-coquille modifiés au silane

(30) Priorität: 21.08.1997 DE 19736409
(43) Veröffentlichungstag der Anmeldung: 03.03.1999
(73) Patentinhaber: Wacker-Chemie GmbH, 81737 München (DE)
(72) Erfinder: Lutz, Hermann, Dr., 84547 Emmerting (DE); Mayer, Theo, Dr., 84533 Haiming (DE); Bastelberger, Thomas, Dr., 84547 Emmerting (DE)
(74) Vertreter: Schuderer, Michael, Dr.

(56) Entgegenhaltungen:
- EP-A- 0 366 969
- EP-B- 0 687 277
- DE-A- 4 402 408

## Beschreibung

Die Erfindung betrifft lagerstabile, silanmodifizierte Kern-Hülle-Copolymerisate, Verfahren zur Herstellung von lagerstabilen, silanmodifizierten Kern-Hülle-Copolymerisat-Dispersionen und -Pulvern sowie deren Verwendung.

Alkoxysilangruppenhaltige Copolymerisate werden in der Praxis häufig in der Anwendung als Baukleber (DE-B 2148456 = GB-A 1407827)) oder zur Herstellung von Dispersionsfarben und Kunststoffputzen (DE-A 2148457 = GB-A 1407827, EP-A 327006 = US-A 5576384) eingesetzt. Die Alkoxysilangruppen werden dabei zur Verbesserung der Naßhaftung und der Wasserbeständigkeit in der Anwendung als Beschichtungsmittel, sowie zur Verbesserung der Haftung auf mineralischen Untergründen in der Anwendung als Baukleber bzw. Fliesenkleber in die Copolymerisate einpolymerisiert.

Problematisch bei der Verwendung von alkoxysilangruppenhaltigen Copolymerisaten, insbesondere in Form deren wässrigen Dispersionen, ist deren Neigung zur vorzeitigen Vernetzung durch Hydrolysekondensationsreaktionen der Alkoxysilangruppen. Als Folge davon haben wässrige Dispersionen von alkoxysilanfunktionellen Copolymeren häufig nur ungenügende Lagerstabilität und verlieren bei mehrmonatiger Lagerung ihre sehr guten Bindemitteleigenschaften.

Aus der EP-B 687277 sind wässrige Dispersionen von Kern-Hülle-Copolymerisaten bekannt, die mit einer Verfahrensweise zugänglich sind, bei der die alkoxysilanfunktionellen Comonomeren mit einer geringen Menge an überwiegend hydrophilen Comonomeren zu einem wasserquellbaren bzw. wasserlöslichen Polymerisat umgesetzt werden, welches anschließend bei der Polymerisation der Hauptmenge an hydrophobem Comonomer den dabei gebildeten hydrophoben Kern umhüllt. Man erhält damit Kern-Hülle-Polymerisate bei denen die alkoxysilanfunktionellen Comonomereinheiten außen in der Hülle vorliegen, mit dem Effekt, daß mit relativ geringen Mengen an alkoxysilanfunktionellem Comonomer sehr gute Haftungseigenschaften resultieren. Nachteilig ist aber, daß nach sechsmonatiger Lagerung dieser Dispersionen die sehr guten Bindemitteleigenschaften (Haftzugfestigkeiten nach Trocken- und Naßlagerung) in Dispersionsfliesenkleber und Putzen nicht mehr erreicht werden.

Aus der EP-A 444827 sind silanmodifizierte Kern-Hülle-Copolymerisat-Dispersionen zur Herstellung von elastischen Beschichtungen bekannt, welche einen Kern aus Vinylester-Olefin-Acrylat-Vinylsilan-Copolymer und eine Vinylester-Olefin-Hülle enthalten. Zur Herstellung wird ein Gemisch aus Vinylester, Acrylat und Vinylsilan teilweise vorgelegt, Ethylen aufgedrückt und der Rest des Comonomergemisches zudosiert. Nach Beendigung der silanhaltigen Monomerdosierung wird eine zweite, silanfreie Vinylesterdosierung gestartet. Mit diesem Verfahren wird die Bildung eines silanhaltigen, hydrophoben Kerns, der durch Vernetzung über die Silanfunktionen besondere Festigkeit aufweist, und die Bildung einer silanfreien Hülle erzwungen. Obwohl bei diesen Kern-Hülle-Polymerisaten der Silananteil im Kern konzentriert ist und von einer Hülle umgeben ist, werden auch mit diesem System bei der Anwendung als Fliesenkleber nach Naßlagerung extrem schlechte Haftzugswerte erreicht.

Aus der EP-A 366969 (US-A 5100948) ist bekannt, daß Klebstoffe für keramische Fliesen auf der Basis von wässrigen Dispersionen von Polymerisaten, welche Mercaptosilaneinheiten anstelle von Vinylsilan-Einheiten eine höhere Wasserbeständigkeit im verfestigten Zustand zeigen als vinylsilanhaltige Polymerdispersionen.

Es bestand somit die Aufgabe, ausgehend von den silanmodifizierten Kern-Hülle-Copolymerisaten aus der EP-A 687277 lagerstabile, silanmodifizierte Kern-Hülle-Copolymerisat-Dispersionen zur Verfügung zu stellen, mit denen auch nach 12-monatiger Lagerung bei Raumtemperatur über die Vernetzung der Silanfunktionen hochwertige Bindemitteleigenschaften erhalten werden.

Überraschenderweise wurde gefunden, daß durch Einpolymerisieren von hydrolysierbaren, siliciumorganischen Polymerisationsreglern wie Mercaptosilanen im Kernpolymerisat Kern-Hülle-Polymerisate erhalten werden, welche auch nach 12-monatiger Lagerung sehr gute Bindemitteleigenschaften aufweisen. Weiter wurde gefunden, daß man mit der Kombination von Mercaptosilanen und olefinisch ungesättigten Siliciumverbindungen im Kernpolymerisat eine weitere deutliche Verbesserung des Eigenschaftsprofils erreicht.

Gegenstand der Erfindung sind lagerstabile, silanmodifizierte Kern-Hülle-Copolymerisate, enthaltend ein die Hülle bildendes Copolymerisat I von
a) 70 bis 95 Gew%, bezogen auf das Gesamtgewicht der Hülle, Acrylsäure- und/oder Methacrylsäure(C₁- bis C₁₀-)alkylester, von denen 20 bis 80 Gew% eine Wasserlöslichkeit von höchstens 2 g/l und 80 bis 20 Gew%, jeweils bezogen auf die Comonomere a), eine Wasserlöslichkeit von mindestens 10 g/l aufweisen, und
b) 5 bis 30 Gew%, bezogen auf das Gesamtgewicht der Hülle, eines oder mehrerer ethylenisch ungesättigter, funktioneller und wasserlöslicher Monomeren mit einem Anteil von 25 bis 100 Gew%, bezogen auf die Comonomere b), an ungesättigten Carbonsäuren, und
ein den Kern bildendes Copolymerisat II von einem oder mehreren Monomeren c) aus der Gruppe der Vinylester, der monoolefinisch ungesättigten Mono- oder Dicarbonsäureester, der Vinylaromaten, der Olefine, der 1.3-Diene und der Vinylhalogenide, dadurch gekennzeichnet, daß die Hülle keine Silanverbindungen enthält und der Kern ein oder mehrere Silanverbindungen d) enthält aus der Gruppe der Mercaptosilane, gegebenenfalls in Kombination mit olefinisch ungesättigten, hydrolysierbaren Siliciumverbindungen.

Ein weiterer Gegenstand der Erfindung ist ein Verfahren zur Herstellung von lagerstabilen, silanmodifizierten Kern-Hülle-Copolymerisat-Dispersionen und -Pulvern durch radikalische Emulsionspolymerisation einer Comonomermischung I, enthaltend
a) 70 bis 95 Gew%, bezogen auf das Gesamtgewicht der Comonomermischung I, Acrylsäure- und/oder Methacrylsäure(C₁- bis C₁₀-)alkylester, von denen 20 bis 80 Gew% eine Wasserlöslichkeit von höchstens 2 g/l und 80 bis 20 Gew%, jeweils bezogen auf die Comonomere a), eine Wasserlöslichkeit von mindestens 10 g/l aufweisen, und
b) 5 bis 30 Gew%, bezogen auf das Gesamtgewicht der Comonomermischung I, eines oder mehrerer ethylenisch ungesättigter, funktioneller und wasserlöslicher Monomeren mit einem Anteil von 25 bis 100 Gew%, bezogen auf die Comonomere b), an ungesättigten Carbonsäuren, wobei
die Comonomermischung I zusammen mit Wasser und Emulgator bei einem pH-Wert von 2 bis 5 in einem Reaktor vorgelegt wird, die Polymerisation bei einer Temperatur von 40°C bis 90°C durch Zugabe eines Initiators gestartet wird und bei einem Umsatz von mindestens 40 % der Comonomermischung I eine Comonomermischung II, enthaltend ein oder mehrere Monomere c) aus der Gruppe der Vinylester, der monoolefinisch ungesättigten Mono- oder Dicarbonsäureester, der Vinylaromaten, der Olefine, der 1.3-Diene und der Vinylhalogenide, und gegebenenfalls weiterer Emulgator und Initiator zudosiert wird, und die damit erhaltene Copolymerdispersion gegebenenfalls getrocknet wird, dadurch gekennzeichnet, daß die Comonomermischung I keine Silanverbindungen enthält und die Comonomermischung II ein oder mehrere Silanverbindungen d) enthält aus der Gruppe der Mercaptosilane, gegebenenfalls in Kombination mit einer oder mehreren olefinisch ungesättigten, hydrolysierbaren Siliciumverbindungen.

Der Anteil der Comonomermischung I und damit der Anteil des Hüllpolymerisats I, beträgt 2 bis 25 Gew%, bezogen auf das Gesamtgewicht des Kern-Hülle-Copolymerisats. Als Bestandteile des Gemisches a) eignen sich die Ester der Acryl- und/oder Methacrylsäure mit geradkettigen oder verzweigten aliphatischen C₁- bis C₁₀-Alkoholen, gegebenenfalls in Kombination mit den entsprechenden Diestern der Fumar- oder Maleinsäure. Eine Tabelle zur Wasserlöslichkeit dieser Ester findet sich in "Vinyl and Diene Monomers, Part 1", E.C.Leonard Ed., Wiley-Interscience, New York (1970) S.149 ff.

Geeignete Ester der Acryl-, Methacryl-, Fumar- oder Maleinsäure mit einer Wasserlöslichkeit von höchstens 2 g/l sind beispielsweise Butylacrylat, Ethylhexylacrylat, Ethylmethacrylat, Butylmethacrylat, Dibutylmaleat oder -fumarat und Diethylhexylmaleat oder -fumarat. Vorzugsweise werden Butylacrylat und/oder Ethylhexylacrylat verwendet. Gegebenenfalls können die genannten Ester der Acrylsäure, Methacrylsäure, Fumarsäure und Maleinsäure auch teilweise durch ein oder mehrere Monomere aus der Gruppe der Vinylester von verzweigten oder unverzweigten Monocarbonsäuren mit 1 bis 12 C-Atomen wie Vinylacetat, der Vinylaromaten wie Styrol, der Olefine wie Ethylen, der 1.3-Diene wie 1.3-Butadien, und Vinylchlorid ersetzt werden.

Geeignete Ester mit einer Wasserlöslichkeit über 10 g/l sind beispielsweise Methylacrylat, Methylmethacrylat und Ethylacrylat. Besonders bevorzugt sind Ethylacrylat und/oder Methylmethacrylat.

Als wasserlösliche Monomere b) eignen sich die Acryl-, Methacryl-, Itacon-, Fumar- und/oder Maleinsäure bzw. die entsprechenden Alkali- und Ammoniumsalze; deren Mono- und gegebenfalls Diamide, welche am Stickstoff ein oder zweifach durch die Methylolgruppe substituiert sein können; die Monoester der genannten Dicarbonsäuren mit C₁- bis C₃-Alkoholen; die Vinylsulfonate, die mit Sulfonatgruppen substituierten Ester ungesättigter Carbonsäuren wie Sulfoethylmethacrylat oder Sulfopropylmethacrylat, die mit Sulfonatgruppen substituierten Amide ungesättigter Carbonsäuren wie Acrylamidomethylpropansulfonsäure, mit Sulfonatgruppen substituierte Styrole wie Styrolsulfonsäure; N-Vinylpyrrolidon, N-Vinylformamid und die mit Hydroxylgruppen substituierten Ester ungesättigter Carbonsäuren. Unter wasserlöslich ist dabei zu verstehen, daß bei Normalbedingungen mehr als 10 g/l in Wasser löslich sind.

Bevorzugte wasserlösliche Monomere b) sind Acrylsäure, Methacrylsäure und deren Alkali- und Ammoniumsalze, Acrylamid, Methacrylamid, N-Methylolacrylamid, N-Methylolmethacrylamid, Hydroxyethylacrylat, Vinylsulfonat, und mit Sulfonatgruppen substituierte Ester und Amide der Acryl- und Methacrylsäure wie Sulfoethyl- und Sulfopropylmethacrylat und Acrylamidomethylpropansulfonsäure. Besonders bevorzugt sind Acrylsäure, Methacrylsäure, Acrylamid und Methacrylamid. Besonders bevorzugt sind auch Ausführungsformen bei denen neben den als besonders bevorzugt genannten Comonomeren noch 0.01 bis 10 Gew%, bezogen auf das Gesamtgewicht des Hüllpolymerisats I, sulfonatgruppenhaltige Comonomere wie Vinylsulfonat, Sulfoethyl- und Sulfopropylmethacrylat, Styrolsulfonsäure, Allylsulfonat, Methallylsulfonat und Acrylamidomethylpropansulfonsäure copolymerisiert werden.

Der Anteil der Comonomermischung II und damit der Anteil des Kernpolymerisats beträgt 75 bis 98 Gew%, bezogen auf das Gesamtgewicht des Kern-Hülle-Copolymerisats. Das Kernpolymerisat bzw. die zu dessen Herstellung eingesetzte Comonomermischung II enthält ein oder mehrere Monomere c) aus der Gruppe der Vinylester von verzweigten und unverzweigten Carbonsäuren mit 1 bis 12 C-Atomen wie Vinylacetat, Vinylpropionat, Vinylpivalat, Vinylethylhexanoat, VeoVa9^{R} und VeoVa10^{R} (Vinylester von alpha-verzweigten Carbonsäuren mit 9 bis 10 C-Atomen), 2-Ethylhexansäurevinylester und Pivalinsäurevinylester; der monoolefinisch ungesättigten Mono- oder Dicarbonsäureester, deren Säurekomponente aus 3 bis 5 C-Atomen besteht und deren Alkoholkomponente aus 1 bis 8 C-Atomen besteht, beispielsweise Acrylsäure- und Methacrylsäureester des Methanols, Ethanols, Butanols und 2-Ethylhexanols wie Methylmethacrylat, Butylacrylat, 2-Ethylhexylacrylat; der Vinylaromaten wie Styrol und Vinyltoluol; der Olefine wie Ethylen und Propylen; der 1.3-Diene wie Butadien und Isopren; und der Vinylhalogenide wie Vinylchlorid.

In geringen Mengen können auch mehrfach ethylenisch ungesättigte Monomere wie Allylmethacrylat, Divinyladipat, Butandioldiacrylat und Triallylcyanurat in Mengen von 0 bis 2 Gew%, bevorzugt von 0.05 bis 0.5 Gew%, jeweils bezogen auf das Gesamtgewicht des Comonomergemisches II, eingesetzt werden.

Geeignete Silanverbindungen d) sind ein oder mehrere Mercaptosilane der allgemeinen Formel HS-CR₂-SiR'₃, wobei R gleich oder verschieden ist und die Bedeutung H und C₁- bis C₆-Alkyl-gruppe, R' gleich oder verschieden ist und die Bedeutung C₁-bis C₆-Alkylgruppe und C₁- bis C₆-Alkoxygruppe hat, wobei mindestens einer der Reste R'eine Alkoxygruppe ist. Bevorzugt werden 3-Mercaptopropyltriethoxysilan, 3-Mercaptopropyltrimethoxysilan und 3-Mercaptopropylmethyldimethoxysilan. Die Mercaptosilane sind im allgemeinen in einer Menge von 0.01 bis 10 Gew%, bezogen auf das Gesamtgewicht des Kernpolymerisats II, enthalten.

In Kombination mit den genannten Mercaptosilanen sind als Silanverbindung d) auch ein oder mehrere olefinisch ungesättigte, hydrolysierbare Siliciumverbindungen geeignet, der allgemeinen Formel R¹Si(CH₃)₀₋₂(OR²)₃₋₁, wobei R¹ die Bedeutung CH₂=CR³-(CH₂)₀₋₁ oder CH₂=CR³CO₂(CH₂)₁₋₃ hat, R² ein unverzweigter oder verzweigter, gegebenenfalls substituierter, Alkylrest mit 3 bis 12 C-Atomen ist, der gegebenenfalls durch eine Ethergruppe unterbrochen sein kann, und R³ für H oder CH₃ steht. Die olefinisch ungesättigten, hydrolysierbaren Siliciumverbindungen können zusätzlich zu dem Mercaptosilananteil in einer Menge von 0.01 bis 10 Gew%, bezogen auf das Gesamtgewicht des Kernpolymerisats II, copolymerisiert werden. Bevorzugt sind gamma-Acryl- bzw. gamma-Methacryloxypropyltri(alkoxy)silane, Vinylalkyldialkoxysilane und Vinyltrialkoxysilane, wobei als Alkoxygruppen z.B. Methoxy-, Ethoxy-, Methoxyethylen, Ethoxyethylen-, Methoxypropylenglykolether-bzw. Ethoxypropylenglykolether-Reste eingesetzt werden können. Weiterhin ist das Trisacetoxyvinylsilan verwendbar. Besonders bevorzugt werden Vinyltriethoxysilan, gamma-Methacryloxypropyltriethoxysilan und Trisacetoxyvinylsilan.

Vorzugsweise sind als Silanverbindung d) ausschließlich 0.01 bis 5 Gew% Mercaptosilan, bezogen auf das Gesamtgewicht des Kernpolymerisats II, im Kernpolymerisat II enthalten. Am meisten bevorzugt sind Kernpolymerisate II mit 0.01 bis 5 Gew%, bezogen auf das Gesamtgewicht des Kernpolymerisats II, von mindestens einem Mercaptosilan und mindestens einem olefinisch ungesättigten Silan. Das Gewichtsverhältnis von Mercaptosilan zu olefinisch ungesättigtem Silan beträgt dabei vorzugsweise von 20 : 1 bis 1 : 20.

Bevorzugt werden Kern-Hülle-Copolymerisate mit 5 bis 15 Gew% eines Hüll-Copolymerisats I von
a) 80 bis 95 Gew%, bezogen auf das Gesamtgewicht der Hülle, Comonomer a), wovon 30 bis 70 Gew% Butylacrylat und/oder Ethylhexylacrylat und 30 bis 70 Gew%, jeweils bezogen auf das Gesamtgewicht der Comonomere a), Ethylacrylat und/oder Methylmethacrylat sind,
b) 4.5 bis 19.5 Gew%, bezogen auf das Gesamtgewicht der Hülle, Acrylsäure und/oder Methacrylsäure, gegebenenfalls zusammen mit Acrylamid und/oder Methacrylamid, und
c) höchstens 10 Gew%, bezogen auf das Gesamtgewicht der Hülle, ein oder mehrere sulfonatfunktionelle Monomere aus der Gruppe Vinylsulfonat, Sulfoethyl- und Sulfopropylmethacrylat, Styrolsulfonsäure, Allylsulfonat, Methallylsulfonat und Acrylamidomethylpropansulfonsäure.

Bevorzugt werden auch Kern-Hülle-Copolymerisate mit 85 bis 95 Gew% eines Kern-Copolymerisats II auf der Basis von Vinylchlorid-Ethylen-, Vinylchlorid-Ethylen-Vinylacetat-, Vinylchlorid-Ethylen-VeoVa9^{R}-, Vinylchlorid-Ethylen-VeoVa9^{R}-, Vinylacetat-Ethylen-, Vinylacetat-VeoVa9^{R}-, Vinylacetat-VeoVa10^{R}-, Methylmethacrylat-2-Ethylhexylacrylat-, Methylmethacrylat-Butylacrylat-, Methylmethacrylat-Butylacrylat-VeoVa9^{R}-, Methylmethacrylat-Butylacrylat-VeoVa10^{R}-, Styrol-Butylacrylat-, Styrol-Butylacrylat-VeoVa9^{R}, Styrol-Butylacrylat-VeoVa10^{R}-, Styrol-2-Ethylhexylacrylat-, Styrol-2-Ethylhexylacrylat-VeoVa9^{R}-, Styrol-2-Ethylhexylacrylat-VeoVa10^{R}-, Styrol-1.3-Butadien-Gemischen. Die Mischungsverhältnisse werden dabei so gewählt, daß Kernpolymerisate mit einer Glasübergangstemperatur Tg von -60°C bis +100°C resultieren. Die Glasübergangstemperatur Tg der Polymerisate kann in bekannter Weise mittels Differential Scanning Calorimetry (DSC) ermittelt werden. Die Tg kann auch mittels der Fox-Gleichung (Fox T. G., Bull. Am. Physics Soc. 1, 3, page 123, 1956) näherungsweise vorausberechnet werden. Tg-Werte für Homopolymerisate sind in Polymer Handbook 2nd Edition, J. Wiley & Sons, New York (1975) aufgeführt.

In diesen bevorzugten Ausführungsformen des Kernpolymerisats II sind noch 0.01 bis 10, vorzugsweise 0.01 bis 5 Gew%, Mercaptosilane aus der Gruppe 3-Mercaptopropyltriethoxysilan, 3-Mercaptopropyltrimethoxysilan und 3-Mercaptopropylmethyldimethoxysilan enthalten, oder 0.01 bis 10 Gew%, vorzugsweise 0.01 bis 5 Gew%, bezogen auf das Gesamtgewicht des Kernpolymerisats II, von mindestens einem der genannten Mercaptosilane und mindestens einem olefinisch ungesättigten Silan aus der Gruppe gamma-Acryl- bzw. gamma-Methacryloxypropyltri(alkoxy)silane, Vinyltrialkoxysilane, Trisacetoxyvinylsilan, in einem Gewichtsverhältnis von 20 : 1 bis 1 : 20.

Das Verfahren kann so durchgeführt werden, daß entweder die Polymerisation der Comonomermischung II zusammen mit dem benötigten Emulgator bzw. Initiator direkt im Anschluß an die Herstellung des alkalilöslichen Schutzkolloids der ersten Stufe erfolgt, das heißt unmittelbar nach Beendigung der Dosierung des Comonomerengemisches I, oder in einer separaten Stufe nachgeschaltet wird.

Geeignete Emulgatoren sind nichtionische und/oder anionische Tenside wie z.B.:
1) Alkylsulfate, besonders solche mit einer Kettenlänge von 8 bis 18 C-Atomen, Alkyl- und Alkylarylethersulfate mit 8 bis 18 C-Atomen im hydrophoben Rest und 1 bis 50 Ethylenoxideinheiten.
2) Sulfonate, besonders Alkylsulfonate mit 8 bis 18 C-Atomen, Alkylarylsulfonate mit 8 bis 18 C-Atomen, Ester und Halbester der Sulfobernsteinsäure mit einwertigen Alkoholen oder Alkylphenolen mit 4 bis 15 C-Atomen im Alkylrest; gegebenenfalls können diese Alkohole oder Alkylphenole auch mit 1 bis 40 Ethylenoxideinheiten ethoxyliert sein.
3) Phosphorsäureteilester und deren Alkali- und Ammoniumsalze, besonders Alkyl- und Alkylarylphosphate mit 8 bis 20 C-Atomen im organischen Rest, Alkylether- und Alkylaryletherphosphate mit 8 bis 20 C-Atomen im Alkyl bzw. Alkylarylrest und 1 bis 50 EO-Einheiten.
4) Alkylpolyglykolether bevorzugt mit 8 bis 40 EO-Einheiten und Alkylresten mit 8 bis 20 C-Atomen.
5) Alkylarylpolyglykolether bevorzugt mit 8 bis 40 EO-Einheiten und 8 bis 20 C-Atomen in den Alkyl-und Arylresten.
6) Ethylenoxid/Propylenoxid (EO/PO)-Blockcopolymere bevorzugt mit 8 bis 40 EO- bzw. PO-Einheiten.

Bevorzugte anionische Emulgatoren bei der Polymerisation des Comonomergemisches I und bei Zugabe des Comonomergemisches II sind die ethoxylierten Vertreter der Gruppen 1 bis 5. Besonders bevorzugt sind die ethoxylierten Vertreter der Gruppe 1.

Die Polymerisation wird mit den üblicherweise eingesetzten Methoden gestartet. Besonders geeignet sind zumindest teilweise wasserlösliche, bevorzugt gänzlich wasserlösliche anorganische oder organische peroxidische Verbindungen, wie Peroxoverbindungen, Hydroperoxide und Perester sowie wasserlösliche Azoverbindungen. Genannt seien Alkali- oder Ammoniumperoxo(di)sulfate oder -phosphate, Wasserstoffperoxid, tertiär-Butylhydroperoxid, Azobiscyanovaleriansäure und tertiär-Butylpermaleinat. Die genannten Peroxide können auch gegebenfalls in bekannter Weise mit Reduktionsmitteln kombiniert werden. Geeignete Reduktionsmittel sind z.B. Alkaliformaldehydsulfoxylate (BRÜGGOLIT^{R}, RONGALIT^{R}), Alkalisulfite und Alkalibisulfite, Alkalithiosulfate und Ascorbinsäure. In bekannter Weise ist dann auch vielfach der Einsatz von geringen Mengen an Schwermetallsalzen, z.B. von Eisen-II-Salzen angebracht. Besonders bevorzugt ist die thermische Polymerisation mit Alkali- oder Ammoniumperoxo(di)sulfaten. Vorzugsweise wird eine Initiatormenge von 0.01 bis 1.0 Gew%, bezogen auf das Gesamtgewicht der Comonomeren, eingesetzt.

Es können weitere übliche Hilfsmittel, wie Puffersubstanzen, Regler oder Inhibitoren, gegen vorzeitige Polymerisation eingesetzt werden. In einer bevorzugten Ausführungsform werden die Comonomergemische I und II in Gegenwart von Polymerisationsreglern in den üblichen Mengen, beispielsweise in Gegenwart von n-Dodecylmercaptan, t-Dodecylmercaptan, Mercaptopropionsäure, Mercaptopropionsäuremethylester, Isopropanol oder Acetaldehyd, polymerisiert.

Im folgenden wird eine besonders bevorzugte Ausführungsform des Verfahrens näher beschrieben:

Die unter b) genannten Monomeren des Comonomerengemisches I werden zusammen mit entionisiertem Wasser, 0.5 bis 10 Gew%, vorzugsweise 1 bis 5 Gew%, jeweils bezogen auf Comonomergemisch I, eines vorzugsweise anionischen Emulgators oder Emulgatorgemisches und gegebenfalls weiteren üblichen Zusätzen, wie Puffern, Reglern und Inhibitoren, vorgelegt und ein pH-Wert von 2 bis 5, vorzugsweise von 2.5 bis 4, durch Zugabe von bevorzugt flüchtigen Säuren oder Basen wie z.B. Ameisensäure oder Ammoniak eingestellt. Nach Zugabe der unter a) genannten Monomeren und Einstellen der Polymerisationstemperatur von 40°C bis 90°C, bevorzugt 60°C bis 80°C, wird die Polymerisation durch Zugabe eines Initiators gestartet.

Sobald die Monomeren des Comonomergemisches I zu 40 bis 99 %, vorzugsweise zu 50 bis 95 %, umgesetzt sind, wird mit der Dosierung des Comonomergemisches II, des restlichen Emulgators und des restlichen Wassers in Form einer Präemulsion begonnen; gegebenfalls wird Ethylen aufgedrückt. Bei der Copolymerisation von Ethylen hält man den Ethylendruck vorzugsweise während der Polymerisation bei 8 bis 80 bar und läßt ihn gegen Ende der Polymerisation durch Schließen der Ethylenzufuhr abfallen.

Nach Beendigung der Zugabe des Comonomergemisches II wird die Zufuhr vom Initiator aufrechterhalten, bis die eingesetzten Monomere bis auf gegebenfalls verwendetes Ethylen zu mehr als 90 %, bevorzugt mehr als 99 %, umgesetzt sind. Anschließend wird der pH-Wert der Dispersion auf Werte zwischen 6 und 10, bevorzugt zwischen 7 und 9, eingestellt, gegebenfalls noch vorhandener Überdruck abgelassen, die Dispersion durch Anlegen von Vakuum entgast, gegebenfalls in bekannter Weise gestrippt und anschließend abgekühlt.

Insbesonders werden bei der Copolymerisation von Ethylen in das Kernpolymerisat 1 bis 10 Gew% des Comonomergemisches II zusammen mit den Monomeren des Comonomergemisches I als nicht oder in nur geringem Ausmaß mit den Comonomeren a) und b) copolymerisierbares Quellmittel vorgelegt. Dazu können nur solche Comonomere c) eingesetzt werden, die unter den Bedingungen der Polymerisation des Hüllpolymerisats mit den Monomeren a) und b) nicht oder nur in geringem Ausmaß copolymerisieren. Dies sind Vinylacetat und Vinylester von Carbonsäuren mit 5 bis 10 C-Atomen wie Vinylpivalat, Vinylethylhexanoat, VeoVa9^{R}, VeoVa10^{R}.

Die mit dem erfindungsgemäßen Verfahren erhältlichen wässrigen Dispersionen haben einen Feststoffgehalt von 30 bis 75 Gew%, vorzugsweise von 40 bis 65 Gew%. Zur Herstellung von in Wasser redispergierbaren Polymerpulvern können die wässrigen Dispersionen getrocknet werden, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 55°C bis 100°C, bevorzugt 70°C bis 90°C, je nach Anlage, Tg des Harzes und gewünschtem Trocknungsgrad, gewählt.

Zur Gewährleistung der Redispergierbarkeit werden der Dispersion vor der Trocknung Schutzkolloide als Verdüsungshilfe zuzugeben. In der Regel wird die Verdüsungshilfe in einer Menge von 5 bis 25 Gew%, bezogen auf die polymeren Bestandteile der Dispersion, eingesetzt. Geeignete Verdüsungshilfen sind dem Fachmann bekannt. Bevorzugt werden teilverseifte Polyvinylacetate, Polyvinylpyrrolidone; Polysaccharide in wasserlöslicher Form wie Stärken, Cellulosen und deren Carboxymethyl-, Methyl-, Hydroxyethyl-, Hydroxypropyl-Derivate; Proteine wie Casein oder Caseinat; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Bei der Verdüsung hat sich vielfach ein Gehalt von bis zu 1.5 Gew% Antischaummittel, bezogen auf das Basispolymerisat, als günstig erwiesen. Zur Erhöhung der Lagerfähigkeit durch Verbesserung der Verblockungsstabilität, insbesonders bei Pulvern mit niedriger Glasübergangstemperatur, kann das erhaltene Pulver mit einem Antiblockmittel (Antibackmittel), vorzugsweise bis 30 Gew%, bezogen auf das Gesamtgewicht polymerer Bestandteile, versetzt werden. Beispiele für Antiblockmittel sind Ca- bzw. Mg-Carbonat, Talk, Gips, Kieselsäure, Silicate mit Teilchengrößen vorzugsweise im Bereich von 10 nm bis 10 µm

Die wässrige Dispersionen und die in Wasser redispergierbaren Dispersionspulver der Kern-Hülle-Copolymerisate eignen sich zur Herstellung von kunststoffgebundenen Putzen mit guter Wasserbeständigkeit, Vollwärmeschutzsystemen und von Farben für Innen- und Außenanstriche mit guter Scheuerbeständigkeit. Weiterhin eignen sich die Dispersionen besonders zur Herstellung von wasserfesten Dispersionsfliesenklebern.

Die nachfolgenden Beispiele dienen der weiteren Erläuterung der Erfindung.

### Beispiel 1:

In einem Rührautoklaven mit ca. 2 l Inhalt wurden 170 ml entionisiertes Wasser, 28 g einer 15 Gew%-igen wässrigen Natrium-Alkylbenzolsulfonatlösung, 9 g einer wässrigen 30 Gew%-igen Acrylamidlösung, 9 g einer wässrigen 58 Gew%-igen Acrylamidomethylpropansulfonsäure-Lösung und 8.5 g Methacrylsäure gegeben. Der pH-Wert wurde mit verdünntem Ammoniak auf 3.5 eingestellt. Anschließend wurde evakuiert, mit Stickstoff gespült, erneut evakuiert und ein Gemisch aus 39 g Butylacrylat und 43 g Methylmethacrylat eingesaugt.
Nach Aufheizen auf 70°C wurden 30 ml einer wässrigen 3 Gew%-igen Ammoniumpersulfatlösung innerhalb von 3 Minuten zugegeben. 45 Minuten später waren die vorgelegten Monomeren zu 90 % umgesetzt. Zu diesem Zeitpunkt wurde der pH-Wert des Vorlagelatex auf 8 bis 10 eingestellt und 15 bar Ethylen aufgedrückt. Gleichzeitig begann die Dosierung einer 3 Gew%-igen wässrigen tert.-Butylhydroperoxidlösung mit einer Rate von 36 ml/h sowie einer 3 Gew%-igen wässrigen Brüggolitlösung (Alkaliformaldehydsulfoxylat) mit einer Rate von 36 ml/h zusammen mit einer Voremulsion bestehend aus 510 g Wasser, 105 g einer 35 Gew%-igen wäßrigen Lösung eines Nonylphenolpolyethylenoxidsulfats mit ca. 25 Mol Ethylenoxid pro Mol Emulgator, 262 g VeoVa^{R}10, 689 g Vinylacetat, 2.2 g 3-Mercaptopropyltrimethoxysilan (Silan GF70 der Wacker-Chemie) und 7.6 g Vinyltriethoxysilan (Silan GF 56 der Wacker-Chemie). Der pH-Wert wurde in dieser Zeit durch NH₃-Zugabe zwischen 5 bis 6 und der Ethylendruck bei 15 bar gehalten.
Nach Beendigung der Voremulsionsdosierung wurde die Ethylendosierung gestoppt. Nach einer Stunde bei 70°C wurde die Initiatordosierung gestoppt, der pH- Wert auf 8.5 durch Ammoniakzugabe eingestellt, Ethylen abgeblasen und noch eine Stunde im Vakuum gerührt.
Die Analysen ergaben einen Ethylengehalt von 4 %, einen Festgehalt von 49.8 % und eine Viskosität (Brookfield-Viskosimeter, 20°C, 20 Upm) von 250 mPas. Das Produkt zeigte eine Mindestfilmtemperatur von 16°C.

### Vergleichsbeispiel 2:

Es wurde analog Beispiel 1 vorgegangen, mit dem Unterschied, daß in der Monomerdosierung für den Kern anstelle des Gemisches von 2.2 g 3-Mercaptopropyltrimethoxysilan und 7.6 g Vinyltriethoxysilan nur 9.8 g Vinyltriethoxysilan eingesetzt wurde.

### Beispiel 3:

Es wurde analog Beispiel 1 vorgegangen, mit dem Unterschied, daß in der Monomerdosierung 7.6 g 3-Mercaptopropyltrimethoxysilan und 2.2 g Vinyltriethoxysilan eingesetzt wurden (umgekehrtes Verhältnis wie in Beispiel 1).

### Beispiel 4:

Es wurde analog Beispiel 1 vorgegangen, mit dem Unterschied, daß in der Monomerdosierung nur 9.8 g 3-Mercaptopropyltrimethoxysilan und kein Vinyltriethoxysilan eingesetzt wurden.

### Vergleichsbeispiel 5:

Es wurde analog Beispiel 1 vorgegangen, mit dem Unterschied, daß in der Monomerdosierung kein 3-Mercaptopropyltrimethoxysilan und kein Vinyltriethoxysilan eingesetzt wurde.

### Vergleichsbeispiel 6:

Es wurde analog Beispiel 1 vorgegangen, mit dem Unterschied, daß anstelle der Dosierung von 2.2 g 3-Mercaptopropyltrimethoxysilan und 7.6 g Vinyltriethoxysilan 9.8 g 3-Mercaptopropyltrimethoxysilan in der Vorlage (Hülle) copolymerisiert wurden.

### Vergleichsbeispiel 7:

Es wurde analog Beispiel 1 vorgegangen, mit dem Unterschied, daß anstelle der Dosierung von 2.2 g 3-Mercaptopropyltrimethoxysilan und 7.6 g Vinyltriethoxysilan 9.8 g Vinyltriethoxysilan in der Vorlage (Hülle) copolymerisiert wurden.

### Anwendungstechnische Prüfung:

Zur anwendungstechnischen Prüfung wurden die Dispersionen aus den Beispielen bzw. Vergleichsbeispielen in einer Rezeptur für Fliesenkleber getestet.

### Prüfrezeptur für Dispersionsfliesenkleber:

| Teile | Stoff |
|---|---|
| 0.20 | Wasser |
| 0.10 | Konservierungsmittel (Parmetol DF 12) |
| 0.15 | Dispergiermittel (Styrodex PK 90) |
| 0.20 | Verdickungsmittel (Tylose MHP 30000yp) |
| 0.25 | Verdickungsmittel (Rohagit SD 15) |
| 0.05 | Dispergierhilfsmittel (AMP 90) |
| 0.15 | Ammoniak |
| 0.15 | Entschäumer (Agitan 281) |
| 51.80 | CaCO₃-Füllstoff (Durcal 40) |
| 8.50 | CaCO₃-Füllstoff (Durcal 10) |
| 37.75 | Dispersion (Festgehalt 50 Gew%) |

Die Klebemittel der obengenannten Rezeptur wurden mit Filmbildehilfsmittel (1/1-Mischung aus Dowanol DPnB und Dowanol PnB) auf eine Mindestfilmbildetemperatur von 0°C eingestellt.

Mit den in den Beispielen bzw. Vergleichsbeispielen erhaltenen Dispersionen wurden nach 1-wöchiger, 6-monatiger und 12-monatiger Lagerung Klebemittel mit der obengenannten Rezeptur hergestellt und damit Keramikfliesen auf Beton verklebt. Die Haftzugfestigkeit der verklebten Fliesen wurde nach 28 Tagen Lagerung bei Normklima (trocken) und nach 28 Tagen Lagerung bei Normklima mit zusätzlich 21 Tagen Lagerung in Wasser (naß) gemäß DIN 18156 geprüft. Die Prüfergebnisse sind in Tabelle 1 zusammengefaßt.

Die Prüfergebnisse zeigen, daß man mit der Kombination von Mercaptosilan-Einheiten und Vinylsilan-Einheiten im Kernpolymerisat auch nach 12 Monaten noch gute Naßhaftung erhält (Beispiel 1, Beispiel 3). Enthält der Kern nur Mercaptosilan fällt die Naßhaftung nach 12 Monaten Lagerzeit deutlich ab (Beispiel 4). Enthält der Kern nur Vinylsilan-Einheiten (Vergleichsbeispiel 2) oder weder Mercaptosilan noch Vinylsilan (Vergleichsbeispiel 5) wird bereits nach 6 Monaten keine Naßhaftung mehr erreicht. Werden die Mercaptosilan-Einheiten nur in die Hülle eingebaut (Vergleichsbeispiel 6) sind die Ergebnisse noch schlechter als bei Silan-freien Polymersaten (Vergleichsbeispiel 5). Wird Vinylsilan in die Hülle eingebaut erhält man nach 6 Monaten keine Naßhaftung mehr (vergleichsbeispiel 7).

**Tabelle 1**

| Haftzugfestigkeit [N/mm²] | | | | | | |
|---|---|---|---|---|---|---|
| | 1 Woche | | 6 Monate | | 12 Monate | |
| | trocken | naß | trocken | naß | trocken | naß |
| Bsp. 1 | 2.31 | 0.55 | 2.17 | 0.51 | 2.19 | 0.42 |
| V.bsp. 2 | 1.98 | 0.16 | 2.12 | - * | 2.03 | - * |
| Bsp. 3 | 2.09 | 0.37 | 2.03 | 0.36 | 2.13 | 0.32 |
| Bsp. 4 | 2.14 | 0.31 | 2.17 | 0.25 | 2.08 | 0.11 |
| V.bsp. 5 | 2.16 | 0.11 | 2.02 | - ** | 2.12 | - ** |
| V.bsp. 6 | 1.89 | - * | 1.93 | - * | 1.76 | - * |
| V.bsp. 7 | 2.12 | 0.16 | 1.87 | - ** | | - ** |

| | | | | | | |
|---|---|---|---|---|---|---|
| * = Fliese abgefallen; | | | | | | |
| ** = Haftung zu niedrig für Meßbereich | | | | | | |

## Patentansprüche

1. Lagerstabile, silanmodifizierte Kern-Hülle-Copolymerisate, enthaltend ein die Hülle bildendes Copolymerisat I von
a) 70 bis 95 Gew%, bezogen auf das Gesamtgewicht der Hülle, Acrylsäure- und/oder Methacrylsäure(C₁- bis C₁₀-)-alkylester, von denen 20 bis 80 Gew% eine Wasserlöslichkeit von höchstens 2 g/l und 80 bis 20 Gew%, jeweils bezogen auf die Comonomere a), eine Wasserlöslichkeit von mindestens 10 g/l aufweisen, und
b) 5 bis 30 Gew%, bezogen auf das Gesamtgewicht der Hülle, eines oder mehrerer ethylenisch ungesättigter, funktioneller und wasserlöslicher Monomeren mit einem Anteil von 25 bis 100 Gew%, bezogen auf die Comonomere b), an ungesättigten Carbonsäuren, und
ein den Kern bildendes Copolymerisat II von einem oder mehreren Monomeren c) aus der Gruppe der Vinylester, der monoolefinisch ungesättigten Mono- oder Dicarbonsäureester, der Vinylaromaten, der Olefine, der 1.3-Diene und der Vinylhalogenide,
dadurch gekennzeichnet, daß die Hülle keine Silanverbindungen enthält und der Kern ein oder mehrere Silanverbindungen d) enthält aus der Gruppe der Mercaptosilane, gegebenenfalls in Kombination mit einer oder mehreren olefinisch ungesättigten, hydrolysierbaren Siliciumverbindungen.

2. Lagerstabile, silanmodifizierte Kern-Hülle-Copolymerisate nach Anspruch 1, dadurch gekennzeichnet, daß ein oder mehrere Mercaptosilane enthalten sind, der allgemeinen Formel HS-CR₂-SiR'₃, wobei R gleich oder verschieden ist und die Bedeutung H und C₁- bis C₆-Alkylgruppe, R' gleich oder verschieden ist und die Bedeutung C₁- bis C₆- Alkylgruppe und C₁- bis C₆-Alkoxygruppe hat, wobei mindestens einer der Reste Reine Alkoxygruppe ist.

3. Lagerstabile, silanmodifizierte Kern-Hülle-Copolymerisate nach Anspruch 1, dadurch gekennzeichnet, daß in Kombination mit den Mercaptosilanen eine oder mehrere olefinisch ungesättigte, hydrolysierbare Siliciumverbindungen enthalten sind, der allgemeinen Formel R¹Si(CH₃)₀₋₂(OR²)₃₋₁, wobei R¹ die Bedeutung CH₂=CR³-(CH₂)₀₋₁ oder CH₂=CR³CO₂(CH₂)₁₋₃ hat, R² ein unverzweigter oder verzweigter, gegebenenfalls substituierter, Alkylrest mit 3 bis 12 C-Atomen ist, der gegebenenfalls durch eine Ethergruppe unterbrochen sein kann, und R³ für H oder CH₃ steht.

4. Lagerstabile, silanmodifizierte Kern-Hülle-Copolymerisate nach Anspruch 1 bis 3, dadurch gekennzeichnet, daß das Kern-Hülle-Polymerisat 5 bis 15 Gew% eines Hüll-Copolymerisats I enthält von
a) 80 bis 95 Gew%, bezogen auf das Gesamtgewicht der Hülle, Comonomer a), wovon 30 bis 70 Gew% Butylacrylat und/ oder Ethylhexylacrylat und 70 bis 30 Gew%, jeweils bezogen auf das Gesamtgewicht der Comonomere a), Ethylacrylat und/oder Methylmethacrylat sind,
b) 4.5 bis 19.5 Gew%, bezogen auf das Gesamtgewicht der Hülle, Acrylsäure und/oder Methacrylsäure, gegebenenfalls zusammen mit Acrylamid und/oder Methacrylamid, und
c) höchstens 10 Gew%, bezogen auf das Gesamtgewicht der Hülle, ein oder mehrere sulfonatfunktionelle Monomere aus der Gruppe Vinylsulfonat, Sulfoethyl- und Sulfopropylmethacrylat, Styrolsulfonsäure, Allylsulfonat, Methallylsulfonat und Acrylamidomethylpropansulfonsäure.

5. Lagerstabile, silanmodifizierte Kern-Hülle-Copolymerisate nach Anspruch 1 bis 3, dadurch gekennzeichnet, daß das Kern-Hülle-Polymerisat 85 bis 95 Gew% eines Kern-Copolymerisats II enthält auf der Basis von Vinylchlorid-Ethylen-, Vinylchlorid-Ethylen-Vinylacetat-, Vinylchlorid-Ethylen-VeoVa9^{R}-, Vinylchlorid-Ethylen-VeoVa10^{R}-, Vinylacetat-Ethylen-, Vinylacetat-VeoVa9^{R}-, Vinylacetat-VeoVa10^{R}-, Methylmethacrylat-2-Ethylhexylacrylat-, MethylmethacrylatButylacrylat-, Methylmethacrylat-Butylacrylat-VeoVa9^{R}-, Methylmethacrylat-Butylacrylat-VeoVa10^{R}-, Styrol-Butylacrylat-, Styrol-Butylacrylat-VeoVa9^{R}, Styrol-Butylacrylat-VeoVa10^{R}-, Styrol-2-Ethylhexylacrylat-, Styrol-2-Ethylhexylacrylat-VeoVa9^{R}-, Styrol-2-Ethylhexylacrylat-VeoVa10^{R}-, Styrol-1.3-Butadien-Gemischen.

6. Lagerstabile, silanmodifizierte Kern-Hülle-Copolymerisate nach Anspruch 5, dadurch gekennzeichnet, daß das Kernpolymerisat II noch 0.01 bis 10 Gew% Mercaptosilane aus der Gruppe 3-Mercaptopropyltriethoxysilan, 3-Mercaptopropyltrimethoxysilan und 3-Mercaptopropylmethyldimethoxysilan enthält, oder 0.01 bis 10 Gew%, bezogen auf das Gesamtgewicht des Kernpolymerisats II, von mindestens einem der genannten Mercaptosilane und mindestens einem olefinisch ungesättigten Silan aus der Gruppe gamma-Acryl- bzw. gamma-Methacryloxypropyltri(alkoxy)silane, Vinyltrialkoxysilane, Trisacetoxyvinylsilan, in einem Gewichtsverhältnis von 1 : 20 bis 20 : 1.

7. Verfahren zur Herstellung von lagerstabilen, silanmodifizierten Kern-Hülle-Copolymerisat-Dispersionen und -Pulvern durch radikalische Emulsionspolymerisation einer Comonomermischung I, enthaltend
a) 70 bis 95 Gew%, bezogen auf das Gesamtgewicht der Comonomermischung I, Acrylsäure- und/oder Methacrylsäure(C₁-bis C₁₀-)alkylester, von denen 20 bis 80 Gew% eine Wasserlöslichkeit von höchstens 2 g/l und 80 bis 20 Gew%, jeweils bezogen auf die Comonomere a), eine Wasserlöslichkeit von mindestens 10 g/l aufweisen, und
b) 5 bis 30 Gew%, bezogen auf das Gesamtgewicht der Comonomermischung I, eines oder mehrerer ethylenisch ungesättigter, funktioneller und wasserlöslicher Monomeren mit einem Anteil von 25 bis 100 Gew%, bezogen auf die Comonomere b), an ungesättigten Carbonsäuren, wobei
die Comonomermischung I zusammen mit Wasser und Emulgator bei einem pH-Wert von 2 bis 5 in einem Reaktor vorgelegt wird, die Polymerisation bei einer Temperatur von 40°C bis 90°C durch Zugabe eines Initiators gestartet wird und bei einem Umsatz von mindestens 40 % der Comonomermischung I eine Comonomermischung II, enthaltend ein oder mehrere Monomere c) aus der Gruppe der Vinylester, der monoolefinisch ungesättigten Mono- oder Dicarbonsäureester, der Vinylaromaten, der Olefine, der 1.3-Diene und der Vinylhalogenide, und gegebenenfalls weiterer Emulgator und Initiator zudosiert wird, und die damit erhaltene Copolymerdispersion gegebenenfalls getrocknet wird,
dadurch gekennzeichnet, daß die Comonomermischung I keine Silanverbindungen enthält und die Comonomermischung II ein oder mehrere Silanverbindungen d) enthält aus der Gruppe der Mercaptosilane, gegebenenfalls in Kombination mit einer oder mehreren olefinisch ungesättigten, hydrolysierbaren Siliciumverbindungen.

8. Verwendung von wässrigen Dispersionen oder von in Wasser redispergierbaren Pulvern der lagerstabilen, silanmodifizierten Kern-Hülle-Copolymerisate nach Anspruch 1 bis 6 zur Herstellung von kunststoffgebundenen Putzen, von Vollwärmeschutzsystemen, von Farben für Innen- und Außenanstriche und von wasserfesten Dispersionsfliesenklebern.

## Claims

1. Storage-stable, silane-modified core-shell copolymers comprising a shell-forming copolymer I of
a) from 70 to 95% by weight, based on the overall weight of the shell, of acrylic and/or methacrylic C₁-to C₁₀-alkyl esters of which from 20 to 80% by weight have a water solubility of not more than 2 g/l and from 80 to 20% by weight, based in each case on the comonomers a), have a water solubility of at least 10 g/l, and
b) from 5 to 30% by weight, based on the overall weight of the shell, of one or more ethylenically unsaturated, functional and water-soluble monomers including a proportion of from 25 to 100% by weight, based on the comonomers b), of unsaturated carboxylic acids, and
a core-forming copolymer II of one or more monomers c) from the group of the vinyl esters, monoolefinically unsaturated mono- or dicarboxylic esters, vinylaromatic compounds, olefins, 1,3-dienes and vinyl halides,
characterized in that the shell contains no silane compounds and the core comprises one or more silane compounds d) from the group of the mercaptosilanes alone or in combination with one or more olefinically unsaturated, hydrolysable silicon compounds.

2. Storage-stable, silane-modified core-shell copolymers according to Claim 1 characterized in that one or more mercaptosilanes of the general formula HS-CR₂-SiR'₃ are comprised in which R is identical or different at each occurrence and has the definition H and C₁- to C₆-alkyl group, R' is identical cr different at each occurrence and has the definition C₁- to C₆-alkyl group and C₁- to C₆-alkoxy group, at least one of the radicals R' being an alkoxy group.

3. Storage-stable, silane-modified core-shell copolymers according to Claim 1 characterized in that in combination with the mercaptosilanes one or more olefinically unsaturated, hydrolysable silicon compounds of the general formula R¹Si (CH₃)₀₋₂(OR²)₃₋₁ are comprised, where R¹ has the definition (CH₂)=CR³-(CH₂)₀₋₁ or CH₂=CR³CO₂(CH₂)₁₋₃, R² is an unbranched or branched, unsubstituted or substituted alkyl radical having 3 to 12 carbon atoms which can if desired be interrupted by an ether group, and R³ is H or CH₃.

4. Storage-stable, silane-modified core-shell copolymers according to any of Claims 1 to 3, characterized in that the core-shell copolymer comprises from 5 to 15% by weight of a shell copolymer I of
a) from 80 to 95% by weight, based on the overall weight of the shell, of comonomer a), of which from 30 to 70% by weight is butyl acrylate and/or ethylhexyl acrylate and from 70 to 30% by weight, based in each case on the overall weight of the comonomers a), is ethyl acrylate and/or methyl methacrylate,
b) from 4.5 to 19.5% by weight, based on the overall weight of the shell, of acrylic acid and/or methacrylic acid, alone or together with acrylamide and/or methacrylamide, and
c) at most 10% by weight, based on the overall weight of the shell, of one or more sulphonate-functional monomers from the group vinyl sulphonate, sulphoethyl and sulphopropyl methacrylate, styrenesulphonic acid, allyl sulphonate, methallyl sulphonate and acrylamidomethylpropanesulphonic acid.

5. Storage-stable, silane-modified core-shell copolymers according to any of Claims 1 to 3, characterized in that the core shell copolymer comprises from 85 to 95% by weight of a core polymer II which is based on vinyl chloride-ethylene, vinyl chloride-ethylene-vinyl acetate, vinyl chloride-ethylene-VeoVa9^{®}, vinyl chloride-ethylene-VeoVa10^{®}, vinyl acetate-ethylene, vinyl acetate-VeoVa9^{®}, vinyl acetate-VeoVa10^{®}, methyl methacrylate-2-ethylhexyl acrylate, methyl methacrylate-butyl acrylate, methyl methacrylate-butyl acrylate-VeoVa9^{®}, methyl methacrylate-butyl acrylace-VeoVa10^{®}, styrene-butyl acrylate, styrene-butyl acrylate-VeoVa9^{®}, styrene-butyl acrylate-VeoVa10^{®}, styrene-2-ethylhexyl acrylate, styrene-2-ethylhexyl acrylate-VeoVa9^{®}, styrene-2-ethylhexyl acrylate-VeoVa10^{®}, and styrene-1,3-butadiene mixtures.

6. Storage-stable, silane-modified core-shell copolymers according to Claim 5, characterized in that the core polymer II also comprises from 0.01 to 10% by weight of mercaptosilanes from the group 3-mercaptopropyltriethoxysilane, 3-mercaptopropyltrimethoxysilane and 3-mercaptopropylmethyldimethoxysilane, or from 0.01 to 10% by weight, based on the overall weight of the core polymer II, of at least one of the said mercaptosilanes and at least one clefinically unsaturated silane from the group gamma-acryl- and gamma-methacryloxypropyltri (alkoxy)silanes, vinyltrialkoxysilanes and trisacetoxyvinylsilane in a weight ratio of from 1:20 to 20:1.

7. Process for preparing storage-stable, silane-modified core-shell copolymer dispersions and powders by free-radical emulsion polymerization of a comonomer mixture I comprising
a) from 70 to 95% by weight, based on the overall weight of the comonomer mixture I, of acrylic and/or methacrylic C₁- to C₁₀-alkyl esters of which from 20 to 80% by weight have a water solubility of not more than 2 g/l and from 80 to 20% by weight, based in each case on the comonomers a), have a water solubility of at least 10 g/l, and
b) from 5 to 30% by weight, based on the overall weight of the comonomer mixture I, of one or more ethylenically unsaturated, functional and water-soluble monomers including a proportion of from 25 to 100% by weight, based on the comonomers b), of unsaturated carboxylic acids, and
the comonomer mixture I is introduced into a reactor together with water and emulsifier at a pH of from 2 to 5,
polymerization is started by adding an initiator at a temperature of from 40°C to 90°C and, at a conversion of at least 40% of the comonomer mixture I, a comonomer mixture II comprising one or more monomers c) from the group of the vinyl esters, monoolefinically unsaturated mono- or dicarboxylic esters, vinylaromatic compounds, olefins, 1,3-dienes and vinyl halides is metered in, alone or with further emulsifier and initiator, and the resulting copolymer dispersion is dried if desired, characterized in that the comonomer mixture I contains no silane compounds and the comonomer mixture II comprises one or more silane compounds d) from the group of the mercaptosilanes alone or in combination with one or more olefinically unsaturated, hydrolysable silicon compounds.

8. Use of an aqueous dispersion or water-redispersible powder of the storage-stable, silane-modified core-shell copolymer according to any of Claims 1 to 6 for preparing polymer-bound plasters, full heat insulation systems, interior and exterior paints, and water-resistant dispersion tile adhesives.

## Revendications

1. Copolymères coeur-coquille modifiés par un silane et stables au stockage, comprenant un copolymère I formant la coquille, à base de
a) de 70 à 95% en poids, par rapport au poids total de la coquille, d'esters C₁-C₁₀-alkyliques de l'acide acrylique et/ou de l'acide méthacrylique, parmi lesquels de 20 à 80% en poids présentent une solubilité dans l'eau d'au plus 2 g/1 et de 80 à 20% en poids, dans chaque cas par rapport au comonomères a), présentent une solubilité dans l'eau d'au moins 10 g/1, et
b) de 5 à 30% en poids, par rapport au poids total de la coquille, d'un ou de plusieurs monomères éthyléniquement insaturés, fonctionnels et hydrosolubles, ayant une proportion de 25 à 100% en poids, par rapport aux comonomères b), d'acides carboxyliques insaturés, et un copolymère II formant le coeur, à base d'un ou de plusieurs monomères c) parmi le groupe des esters vinyliques, des esters mono- ou dicarboxyliques mono-oléfiniquement insaturés, des composés vinylaromatiques, des oléfines, des 1,3-diène et des halogénures de vinyle, caractérisés en ce que la coquille ne comprend pas de composés silane et le coeur comprend un ou plusieurs composés silane d) parmi le groupe des mercaptosilanes, éventuellement en association avec un ou plusieurs composés siliciés hydrolysables oléfiniquement insaturés.

2. Copolymères coeur-coquille modifiés par un silane et stables au stockage selon la revendication 1, caractérisés en ce qu'ils comprennent un ou plusieurs mercaptosilanes de formule générale HS-CR₂-SiR'₃, dans laquelle R est identique ou différent et représente H et des groupes alkyle en C₁ à C₆, R' est identique ou différent et représente des groupes alkyle en C₁ à C₆ et des groupes alcoxy en C₁ à C₆, au moins l'un des radicaux R' étant un groupe alcoxy.

3. Copolymères coeur-coquille modifiés par un silane et stables au stockage selon la revendication 1, caractérisés en ce qu'ils comprennent, en association avec les mercaptosilanes, un ou plusieurs composés siliciés hydrolysables oléfiniquement insaturés de formule générale R¹Si(CH₃)₀₋₂(OR²)₃₋₁, dans laquelle R¹ représente CH₂=CR³-(CH₂)₀₋₁ ou CH₂=CR³CO₂(CH₂)₁₋₃, R² est un radical alkyle non ramifié ou ramifié éventuellement substitué ayant de 3 à 12 atomes de carbone, qui peut être éventuellement interrompu par un groupe éther, et R³ représente H ou CH₃.

4. Copolymères coeur-coquille modifiés par un silane et stables au stockage selon les revendications 1 à 3, caractérisés en ce que le polymère coeur-coquille comprend de 5 à 15% en poids d'un copolymère coquille I à base de
a) de 80 à 95% en poids, par rapport au poids total de la coquille, de comonomère a), dont 30 à 70% en poids sont de l'acrylate de butyle et/ou de l'acrylate d'éthylhexyle et 70 à 30% en poids, dans chaque cas par rapport au poids total des comonomères a), sont de l'acrylate d'éthyle et/ou du méthacrylate de méthyle,
b) de 4,5 à 19,5% en poids, par rapport au poids total de la coquille, d'acide acrylique et/ou d'acide méthacrylique, éventuellement conjointement avec de l'acrylamide et/ou du méthacrylamide, et
c) au plus 10% en poids, par rapport au poids total de la coquille, d'un ou de plusieurs monomères à fonction sulfonate parmi le groupe constitué du sulfonate de vinyle, du méthacrylate de sulfoéthyle et de sulfopropyle, de l'acide styrènesulfonique, du sulfonate d'allyle, du sulfonate de méthallyle et de l'acide acrylamidométhylpropanesulfonique.

5. Copolymères coeur-coquille modifiés par un silane et stables au stockage selon les revendications 1 à 3, caractérisés en ce que le polymère coeur-coquille comprend de 85 à 95% en poids d'un copolymère coeur II à base de mélanges chlorure de vinyle/éthylène, chlorure de vinyle/éthylène/acétate de vinyle, chlorure de vinyle/éthylène/VeoVa9^{R}, chlorure de vinyle/éthylène/VeoVa10^{R}, acétate de vinyle/éthylène, acétate de vinyle/VeoVa9^{R}, acétate de vinyle/VeoVa10^{R}, méthacrylate de méthyle/acrylate de 2-éthylhexyle, méthacrylate de méthyle/acrylate de butyle, méthacrylate de méthyle/acrylate de butyle/VeoVa9^{R}, méthacrylate de méthyle/acrylate de butyle/VeoVa10^{R}, styrène/acrylate de butyle, styrène/acrylate de butyle/VeoVa9^{R}, styrène/acrylate de butyle/VeoVa10^{R}, styrène/acrylate de 2-éthylhexyle, styrène/acrylate de 2-éthylhexyle/VeoVa9^{R}, styrène/acrylate de 2-éthylhexyle/VeoVa10^{R}, styrène/1,3-butadiène.

6. Copolymères coeur-coquille modifiés par un silane et stables au stockage selon la revendication 5, caractérisés en ce que le polymère coeur II comprend également de 0,01 à 10% en poids de mercaptosilanes parmi le groupe constitué du 3-mercaptopropyltriéthoxysilane, du 3-mercaptopropyltriméthoxysilane et du 3-mercaptopropylméthyldiméthoxysilane, ou de 0,01 à 10% en poids, par rapport au poids total du polymère coeur II, d'au moins l'un desdits mercaptosilanes et d'au moins un silane oléfiniquement insaturé parmi le groupe constitué de gamma-acryl- ou gamma-méthacryloxypropyltri(alcoxy)silanes, de vinyles trialcoxysilanes, du tris-acétoxyvinylsilane en un rapport pondéral de 1:20 à 20:1.

7. Procédé de préparation de dispersions et de poudres de copolymères coeur-coquille modifiés par un silane et stables au stockage par polymérisation en émulsion radicalaire d'un mélange de comonomères I comprenant
a) de 70 à 95% en poids, par rapport au poids total du mélange de comonomères I, d'esters C₁-C₁₀-alkyliques de l'acide acrylique et/ou de l'acide méthacrylique, parmi lesquels de 20 à 80% en poids présentent une solubilité dans l'eau d'au plus 2 g/l et de 80 à 20% en poids, dans chaque cas par rapport aux comonomères a), présentent une solubilité dans l'eau d'au moins 10 g/l, et
b) de 5 à 30% en poids, par rapport au poids total du mélange de comonomères I, d'un ou de plusieurs monomères éthyléniquement insaturés, fonctionnels et hydrosolubles, ayant une proportion de 25 à 100% en poids, par rapport aux comonomères b), d'acides carboxyliques insaturés, où
le mélange de comonomères I est introduit initialement dans un réacteur avec de l'eau et un émulsifiant à un pH de 2 à 5, la polymérisation est démarrée à une température de 40°C à 90°C en ajoutant un amorceur et, à un taux de conversion d'au moins 40% du mélange de comonomères I, un mélange de comonomères II comprenant un ou plusieurs monomères c) parmi le groupe des esters vinyliques, des esters mono- ou dicarboxyliques mono-oléfiniquement insaturés, des composés vinylaromatiques, des oléfines, des 1,3-diène et des halogénures de vinyle, et éventuellement davantage d'émulsifiant et d'amorceur sont ajoutés en quantité mesurée, et la dispersion de copolymère ainsi obtenue est éventuellement séchée,
caractérisé en ce que le mélange de comonomères I ne comprend pas de composés silane et le mélange de comonomères II comprend un ou plusieurs composés silane d) parmi le groupe des mercaptosilanes, éventuellement en association avec un ou plusieurs composés siliciés hydrolysables oléfiniquement insaturés.

8. Utilisation de dispersions aqueuses ou de poudres redispersables dans l'eau des copolymères coeur-coquille modifiés par un silane et stables au stockage selon les revendications 1 à 6, pour la production de crépis à liaison polymère, de systèmes d'isolation thermique totale, de peintures intérieures et extérieures et d'adhésifs pour carreaux en dispersion résistant à l'eau.
